# EUROPÄISCHE PATENTSCHRIFT

(11) **EP 2 815 204 B1**
(45) Veröffentlichungstag und Bekanntmachung des Hinweises auf die Patenterteilung: **09.12.2015**
(21) Anmeldenummer: 13703512.7
(22) Anmeldetag: 15.01.2013
(51) Int. Cl.: G01B 5/00, G01B 5/24, G01M 13/00

(54) **EINRICHTUNG ZUR VERMESSUNG VON KOLBENRINGEN**
EQUIPMENT FOR MEASURING PISTON RINGS
DISPOSITIF SERVANT À MESURER DES SEGMENTS DE PISTON

(30) Priorität: 18.02.2012 DE 102012003321
(43) Veröffentlichungstag der Anmeldung: 24.12.2014
(73) Patentinhaber: Federal-Mogul Burscheid GmbH, 51399 Burscheid (DE)
(72) Erfinder: PICARD, Jens, 42329 Wuppertal (DE); HORN, Frank, 51399 Burscheid (DE); KLOPP, Marc, Stephan, 42477 Radevormwald (DE); LENHOFF, Ulrich, 51399 Burscheid (DE)
(74) Vertreter: Döpp, Ludger
(86) Internationale Anmeldenummer: PCT/DE2013/000028
(87) Internationale Veröffentlichungsnummer: WO 2013/120471

(56) Entgegenhaltungen:
- DE-A1- 2 951 605
- DE-A1- 10 227 884
- DE-A1- 19 605 776
- DE-U1- 20 017 509
- US-A- 4 326 336
- US-A1- 2002 170 199

## Beschreibung

Die Erfindung betrifft eine Einrichtung zur Messung von Kanten- und Verrundungsmerkmalen an einem Kolbenring gemäß gattungsbildendem Teil des ersten Patentanspruchs.

Die DE 200 17 509 U1 offenbart eine Vorrichtung zum Messen der Fasenlänge eingefaster Werkstücke mit einer Wegmessvorrichtung, die mit einem Messtaster verbunden ist sowie mit einer Auflage für das Werkstück und einem, im Längsverlauf dieser Auflage vorgesehenen Anschlag, der als Schiebeanschlag für das Werkstück dient. Der Messtaster ist stiftförmig mit einem Anschlagzapfen und einem sich daran anschließenden Konusabschnitt ausgebildet, wobei der Messtaster in Längsrichtung etwa rechtwinklig zur Auflage verschiebbar gelagert ist und in Messstellung sich mit seiner Übergangsstelle zwischen Anschlagzapfen und Konusabschnitt bei der Fasenkante des Werkstücks zwischen dessen Anschlagstirnseite und der Fasenfläche befindet. Die Werkstückauflage ist durch eine ebene Platte gebildet, wobei selbige, vorzugsweise etwa mittig, eine Durchtrittsöffnung für den Messtaster aufweist.

Der DE 102 27 884 A1 ist eine Vorrichtung zur Durchführung von Messungen an insbesondere schweren Werkstücken zu entnehmen, wobei die Vorrichtung eine Wegmessvorrichtung mit einem Messtaster aufweist sowie mit einer Auflage für das Werkstück und einem, im Längsverlauf dieser Auflage vorgesehenen Anschlag, der als Schiebeanschlag für das Werkstück dient. Der Messtaster ist an einem Schwenkarm angebracht, der in einer rechtwinklig zur Auflageebene verlaufenden Ebene verschwenkbar ist, wobei die Messtasterlängsachse parallel zur Auflageebene ausgerichtet ist und wobei der Schiebeanschlag parallel zur Schwenkebene des Schwenkarms verläuft. Der Messtaster ist stiftförmig mit einem Anschlagzapfen und einem sich daran anschließenden Konusabschnitt ausgebildet.

Die US 4,326,336 A ist eine gattungsgemäße Messeinrichtung zu entnehmen. Durch von oben auf das zu vermessende Bauteil aufgesetzte Messtaster werden Durchmesser, Neigungen und Planheiten vermessen. Das Bauteil liegt hierbei an Flächenbereichen eines winkelförmig ausgebildeten Anschlags an.

Die DE 29 51 605 A1 offenbart ein Verfahren zum lageorientierten Ausrichten von unrunden Werkstücken, beispielsweise Kolbenringen, indem die Ist-Lage des Werkstücks ermittelt und mit einer vorgebbaren Soll-Lage verglichen wird. Jedes Werkstück wird in spannungsfreier Lage berührungsfrei abgetastet.

Heutige, zum Einsatz gelangende Messgeräte zur Vermessung der Geometrien von Laufflächenkanten und Stoßflächen an Kolbenringen werden mit unterschiedlichen Messgeräten ermittelt und ausgewertet. Während die Laufflächen mittels Laufflächenprofilmessgeräten produktionsbegleitend gemessen werden können, kann die Messung und Auswertung der Stoßflächen nicht produktionsbegleitend erfolgen. Diese Verrundungsmerkmale im Stoßbereich müssen zeitintensiv mittels Konturenmessgeräten erfasst werden, wobei eine Auswertung der Kantengeometrie händisch erfolgt.

Der Erfindung liegt die Aufgabe zugrunde, eine Einrichtung zur universellen Messung von Kanten- und Verrundungsmerkmalen an einem Kolbenring, insbesondere der Laufflächenkanten und Stoßflächen, bereitzustellen, die einfach im Aufbau ist und wobei die jeweiligen Laufflächenkanten und Stoßflächen produktionsbegleitend gemessen und die Messwerte automatisch ausgewertet werden können.

Diese Aufgabe wird dadurch gelöst, dass das Messgerät unter einem Winkel von 45° unterhalb des Auflageelements angeordnet ist.

Vorteilhafte Weiterbildungen des Erfindungsgegenstandes sind den abhängigen Ansprüchen zu entnehmen.

Der Anschlag steht vorzugsweise senkrecht auf der Grundfläche des Auflageelements.

Zum korrekten Ausrichten des jeweiligen Kolbenrings in X- und Y-Richtung kommen, im Hinblick auf unterschiedliche Kolbenringaußendurchmesser, Führungselemente zum Einsatz, die relativ zum Auflageelement bewegbar sind und mit selbigem lösbar in Wirkverbindung stehen.

Der Messvorgang kann sowohl berührend als auch berührungsfrei erfolgen. Die Messung sowohl der Laufflächenkanten als auch der Flankenfläche zur Stoßfläche kann somit produktionsbegleitend mit ein und demselben Messgerät erfolgen, wobei die Auswertung bedienerunabhängig automatisch erfolgt.

Der Erfindungsgegenstand ist anhand eines Ausführungsbeispiels in der Zeichnung dargestellt und wird wie folgt beschrieben. Es zeigen:
- Figur 1: Prinzipskizze der erfindungsgemäßen Einrichtung zur Messung von Kanten- und Verrundungsmerkmalen an einem Kolbenring;
- Figur 2: Teildarstellung des Messbereichs gemäß Figur 1.

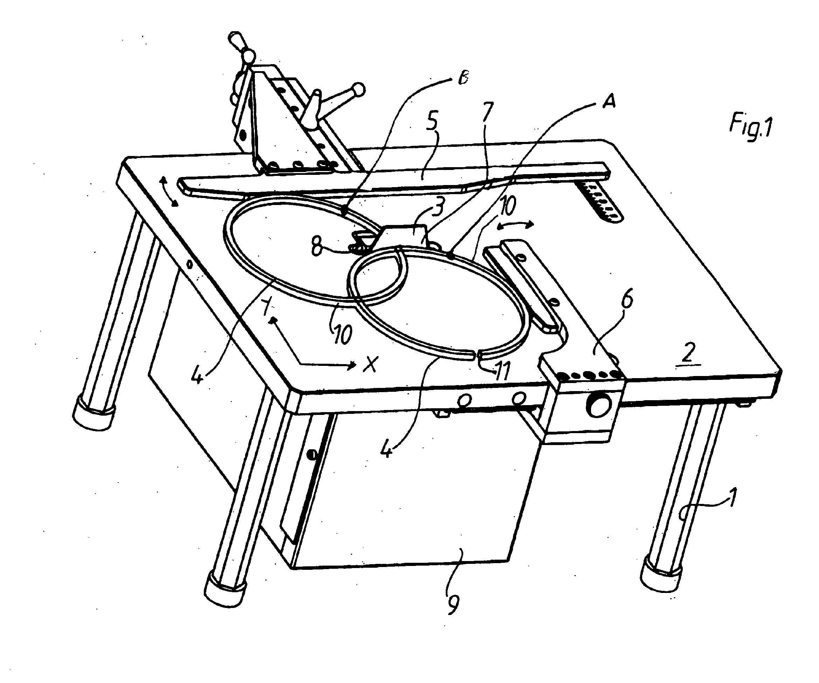

Figur 1 zeigt einen Messtisch 1, beinhaltend ein flächig ausgebildetes Auflageelement 2. Auf der sichtbaren Oberfläche des Auflageelements 2 ist ein, zu dieser Fläche im Wesentlichen senkrecht stehender Anschlag 3 montiert. Das Messobjekt ist ein Kolbenring 4, der mit einer seiner Stirnflächen (Flankenflächen) auf das Auflageelement 2 aufgelegt wird. Zur Anpassung an unterschiedliche Kolbenringdurchmesser sind Führungselemente 5,6 vorgesehen, über welche unterschiedliche Kolbenringflächen mit dem Anschlag 3 in Wirkverbindung gebracht werden.

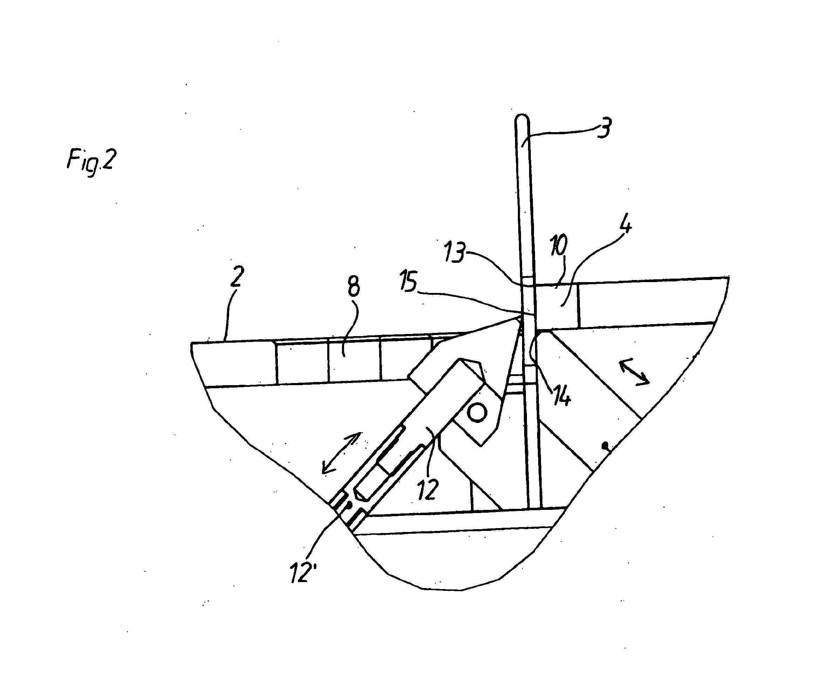

In dieser Figur sind zwei unterschiedliche Messvorgänge dargestellt. Bei dem Messvorgang A wird die Lauffläche (bzw. die spätere Lauffläche) 7 des Kolbenrings 4 über das Führungselement 6 (durchmesserabhängig) händisch an den Anschlag 3 gedrückt. Das Auflageelement 2 verfügt anschlagseitig über eine Ausnehmung 8. Wie in Figur 2 näher dargestellt, ist unterhalb des Auflageelements 2 ein Messgerät positioniert, das unter einem Winkel von 45° unterhalb des Auflageelements 2 innerhalb eines Kastens 9 angeordnet ist. In dieser Messposition können die Flankenflächen 10 zur Lauffläche 7 hin gemessen werden.

Beim Messvorgang B wird der Kolbenring 4 relativ zum Anschlag 3 so durch das Führungselement 5 positioniert, dass über das in Figur 2 dargestellte Messgerät sowie die Ausnehmung 8 vier Kanten, nämlich die Flankenflächen 10 zur Stoßfläche 11 hin, hinsichtlich ihrer Kanten- und Verrundungsmerkmale kontrolliert werden können.

Figur 2 zeigt eine Teilansicht des Auflageelements 2 im Bereich des Messgeräts 12, das mit einem Winkel von 45° unterhalb des Auflageelements 2, unter Bildung einer Messachse 12', positioniert ist.

Ebenfalls erkennbar ist der Kolbenring 4, und zwar im Messvorgang A. In dieser Stellung kann die Laufflächenkante 13,14, d.h. der Übergangsbereich von der Flanke 10 in die Lauffläche 15, vermessen werden. Wie bereits in Figur 1 dargestellt, verfügt das Auflageelement 2 im Bereich des Messgeräts 12 über eine Ausnehmung 8. Ferner erkennbar ist der Anschlag 3.

Somit kann mit ein und demselben Messgerät 12 eine Vielzahl von Kanten an Kolbenringen 4 kontrolliert werden, und zwar produktionsbegleitend, wobei die Auswertung in allen Messvorgängen automatisch erfolgt.

## Patentansprüche

1. Einrichtung zur Messung von Kanten- und Verrundungsmerkmalen an einem Kolbenring (4), beinhaltend ein flächig ausgebildetes Auflageelement (2) für den Kolbenring (4), einen damit in Wirkverbindung stehenden Anschlag (3) zur Anlage definierter Kolbenringabschnitte sowie ein Messgerät (12), das unter einem vorgebbaren Winkel zum Auflageelement (2), respektive zum Anschlag (3), angeordnet ist, wobei das Messgerät (12) unterhalb des Auflageelements (2) angeordnet ist und wobei anschlagseitig eine Ausnehmung (8) im Auflageelement (2) eingebracht ist, durch welche die Vermessung der Kanten- und Verrundungsmerkmale des Kolbenrings (4) erfolgt, **dadurch gekennzeichnet, dass** das Messgerat (12) unter einem Winkel von 45° unterhalb des Auflageelements (2) angeordnet ist.

2. Einrichtung nach Anspruch 1, **dadurch gekennzeichnet, dass** der Anschlag (3) im Wesentlichen senkrecht auf dem Auflageelement (2) positioniert ist.

3. Einrichtung nach Anspruch 1 oder 2, **dadurch gekennzeichnet, dass** zum Ausrichten des jeweiligen Kolbenrings (4) in X- und Y-Richtung, abhängig von seinem Außendurchmesser, Führungselemente (5,6) relativ zum Auflageelement (2) bewegbar sind und mit selbigem in Wirkverbindung stehen.

4. Einrichtung nach einem der Ansprüche 1 bis 4, **dadurch gekennzeichnet, dass** der Messvorgang über einen Messtaster berührend erfolgt.

5. Einrichtung nach einem der Ansprüche 1 bis 3, **dadurch gekennzeichnet, dass** der Messvorgang berührungsfrei erfolgt.

6. Einrichtung nach einem der Ansprüche 1 bis 5, **dadurch gekennzeichnet, dass** die Auswertung der Messergebnisse automatisiert erfolgt.

7. Einrichtung nach einem der Ansprüche 1 bis 7, **dadurch gekennzeichnet, dass** zumindest das Auflageelement (2) samt Anschlag (3) und Führungselementen (5,6) sowie das Messgerät (12) Teile eines Messtisches (1) sind.

## Claims

1. A device for measuring edge and curve features of a piston ring (4), comprising a surface-shaped support element (2) for the piston ring (4), a stop (3) which is actively related to said support element and serves for placing defined piston ring sections against it, as well as a measuring device (12) which is arranged at a pre-determinable angle with respect to the support element (2) respectively the stop (3), wherein the measuring device (12) is placed beneath the support element (2) and wherein a recess (8) is formed in the support element (2) on the side of the stop, through which recess the edge and curve features of the piston ring (4) will be measured, **characterized in that** the measuring device (12) is arranged at an angle of 45° beneath the support element (2).

2. A device according to claim 1, **characterized in that** the stop (3) is essentially positioned vertically on the support element (2).

3. A device according to claim 1 or 2, **characterized in that** guide elements (5, 6) for orienting the respective piston ring (4) in x- and y- direction are actively related to the support element (2) and can be displaced with respect to the same one in dependence on the outer diameter of the piston ring (4).

4. A device according to one of the claims 1 through 4, **characterized in that** the measuring operation is carried out by a measuring probe in a contacting manner.

5. A device according to one of the claims 1 through 3, **characterized in that** the measuring operation is carried out without any contact.

6. A device according to one of the claims 1 through 5, **characterized in that** the evaluation of the measuring results takes place automatically.

7. A device according to one of the claims 1 through 7, **characterized in that** at least the support element (2) including the stop (3) and the guide elements (5, 6) as well as the measuring device (12) are parts of a measuring table (1).

## Revendications

1. Dispositif destiné à mesurer des caractéristiques de bord et de courbure d'un segment de piston (4), comprenant un élément de support (2) configuré comme une surface pour le segment de piston (4), une butée (3) activement relié à l'élément de support (2) pour appliquer des parties de segment de piston définies contre celle-ci, ainsi qu'un instrument de mesure (12) qui est disposé sous un angle pré-déterminable par rapport à l'élément de support (2) respectivement par rapport à la butée (3), l'instrument de mesure (12) étant disposé au-dessous de l'élément de support (2) et un évidement (8) étant formé dans l'élément de support (2) du côté de la butée, à travers lequel évidement les caractéristiques de bord et de courbure du segment de piston (4) sont mesurées, **caractérisé en ce que** l'instrument de mesure (12) est disposé sous un angle de 45° au-dessous de l'élément de support (2).

2. Dispositif selon la revendication 1, **caractérisé en ce que** la butée (3) est essentiellement positionnée de façon verticale sur l'élément de support (2).

3. Dispositif selon la revendication 1 ou la revendication 2, **caractérisé en ce que** pour orienter le segment de piston (4) respectif dans une direction x et y, des éléments de guidage (5, 6) sont activement reliés à l'élément de support (2) et peuvent être déplacés par rapport à celui-ci en fonction du diamètre extérieur du segment de piston (4).

4. Dispositif selon l'une des revendications 1 à 4, **caractérisé en ce que** l'opération de mesure se fait à l'aide d'un palpeur de mesure qui touche le segment de piston.

5. Dispositif selon l'une des revendications 1 à 3, **caractérisé en ce que** l'opération de mesure se fait sans contact.

6. Dispositif selon l'une des revendications 1 à 5, **caractérisé en ce que** l'évaluation des résultats de mesure a lieu automatiquement.

7. Dispositif selon l'une des revendications 1 à 7, **caractérisé en ce qu'**au moins l'élément de support (2), la butée (3) et les éléments de guidage (5, 6) y compris, ainsi que l'instrument de mesure (12) font partie d'une table de mesure (1).
